# EUROPÄISCHE PATENTSCHRIFT

(11) **EP 3 898 312 B1**
(45) Veröffentlichungstag und Bekanntmachung des Hinweises auf die Patenterteilung: **08.10.2025**
(21) Anmeldenummer: 19832296.8
(22) Anmeldetag: 11.12.2019
(51) Int. Cl.: B60L 3/04, H02H 5/12, H02H 1/00, B60L 3/00

(54) **HOCHVOLTVORRICHTUNG ZUM BETREIBEN EINER HOCHVOLTANWENDUNG**
HIGH-VOLTAGE DEVICE FOR THE OPERATION OF A HIGH-VOLTAGE APPLICATION
DISPOSITIF À HAUTE TENSION POUR FAIRE FONCTIONNER UNE APPLICATION À HAUTE TENSION

(30) Priorität: 17.12.2018 DE 102018221908
(43) Veröffentlichungstag der Anmeldung: 27.10.2021
(73) Patentinhaber: Robert Bosch GmbH, 70442 Stuttgart (DE)
(72) Erfinder: MAIBRINK, Thomas, 72813 St. Johann Gaechingen (DE); MAYER, Frank, 71665 Vaihingen/Enz (DE); KIRSCHNER, Manfred, 70197 Stuttgart (DE)
(86) Internationale Anmeldenummer: PCT/EP2019/084576
(87) Internationale Veröffentlichungsnummer: WO 2020/126727

(56) Entgegenhaltungen:
- EP-A1- 1 769 570
- DE-A1- 102006 050 180
- DE-A1- 102009 038 168
- DE-A1- 102011 078 332
- DE-A1- 102011 080 003
- DE-A1- 102011 108 447
- DE-A1- 102014 006 343
- DE-A1- 102015 102 470
- JP-A- H0 937 562
- JP-A- H11 132 215
- US-A1- 2005 032 404

## Beschreibung

Die vorliegende Erfindung betrifft eine Hochvoltvorrichtung zum Betreiben einer Hochvoltanwendung, insbesondere eine Hochvoltvorrichtung, mit welcher ein Berührungsschutz der spannungsführenden Elemente gewährleistet werden kann.

### Stand der Technik

Aktuelle HV-Systeme (Leistungselektronik, HV-Batterie, E-Motor, ...) im Automobilbereich werden mittels Sicherheitssystemen wie zum Beispiel Berührschutzmaßnahmen und Abschaltsystemen abgesichert. Dadurch soll ein unbeabsichtigte Berührung der noch spannungführenden Elemente verhindert werden. Vor einer Berührung der spannungführenden Elemente muss daher sichergestellt werden, dass diese Elemente von der Spannungsversorgung getrennt werden.

In der EP 2 705 970 A2 ist ein Sicherheitssystem für Fahrzeuge zur Reduzierung einer Gefährdung durch einen elektrischen Schlag von einer Batterie beschrieben. Bei diesem Sicherheitssystem wird beim Entfernen eines Betriebssteckers eine Spannungsfreischaltung des Fahrzeuges bewirkt.

In der Druckschrift DE 10 2011 108447 A1 ist ein Verfahren und ein System, um eine Änderung eines Verbindungszustands zweier Verbindungselemente innerhalb eines Fahrzeugs zu erfassen, offenbart.

Weiter ist in der Druckschrift EP 1 401 061 B1 ein Aufbau einer Hochspannungs-Einrichtung sowie ein Hochspannungs-Verbindungsteil zum sicheren Durchführen einer Wartung und Inspektion der an einem elektrischen Fahrzeug montierten Hochspannungs-Vorrichtung, offenbart.

Eines der gängigen Systeme ist mittels einer elektrischen Schleife alle abnehmbaren Teile (z.B. Stecker und Deckel) abzufragen und bei entsprechender Unterbrechung dieser Abfrageschleife die HVsicherheitsrelevanten Bereiche abzuschalten und spannungsfrei zu machen. In vielen Erzeugnissen erfolgt dies mittels zweier zusätzlicher Pins eines bestehenden Steckers (z. B. Fahrzeugsignalstecker oder Abgriff Klimakompressor). Deckel oder andere abnehmbare Teile weisen eine mechanische Kulisse vor, die ein Abnehmen des Deckels vor Ziehen des Steckers verhindert. Somit wird vor Öffnen des/der Deckel dieser Stecker vorab abgezogen und die Entladung des gesamten Systems erfolgt.

Der Hintergrund der Erfindung ist, dass diese Sicherungssysteme zur Spannungsabschaltung aufwendig sind. Bei solchen Sicherungssystemen müssen meist mehrere Bauteile vorgesehen werden, um bei einem Entfernen der Berührungsschutzabdeckung eine Spannungsabschaltung zu gewährleisten.

Es ist daher die Aufgabe der vorliegenden Erfindung eine Hochvoltvorrichtung zum Betreiben einer Hochvoltanwendung anzugeben, welche ein verbessertes Sicherungssystem aufweist, über welches die Spannung bei einem Entfernen der Berührungsschutzabdeckung abschaltbar ist. Dieses Sicherungssystem sollte zudem noch wirtschaftlich realisierbar sein.

### Offenbarung der Erfindung

Die Aufgabe wird durch Hochvoltvorrichtung zum Betreiben einer Hochvoltanwendung mit den Merkmalen nach Anspruch 1 gelöst. Die jeweils rückbezogenen abhängigen Ansprüche geben vorteilhafte Weiterbildungen der Erfindung wieder.

Die Erfindung gibt eine Hochvoltvorrichtung zum Betreiben einer Hochvoltanwendung an. Die Hochvoltvorrichtung umfasst dabei wenigstens ein Detektionsmittel zum Erkennen einer geöffneten Berührungsschutzabdeckung für wenigstens ein spannungsführendes Element, wobei über das Detektionsmittel vor einem vollständigen Abnehmen der Berührungsschutzabdeckung ein Signal abgebbar ist, und eine Abschalteinrichtung, welche mit dem Detektionsmittel verbunden ist und über welche anhand des abgegebenen Signals des Detektionsmittels das spannungsführende Element von einem Hochvoltnetz trennbar ist, wobei das Detektionsmittel an wenigstens einem die Berührungsschutzabdeckung befestigenden Verbindungsmittel angeordnet ist, so dass ein Lösen dieses Verbindungsmittels detektierbar ist, um ein Entfernen der Berührungsschutzabdeckung festzustellen.

Unter einer Berührungsschutzabdeckung im Sinne der Erfindung wird jede Art von Abdeckung verstanden, mit welcher ein spannungsführendes Element vor einer direkten Berührung geschützt werden kann. Das spannungsführende Element ist dabei ein Bauteil, von welchem ein Anwender bei einer Berührung einen elektrischen Schlag erhalten kann. Dazu ist es notwendig, dieses spannungsführendes Teil von einem Hochvoltnetz zu trennen, so dass das spannungsführende Teil spannungsfrei ist. Dadurch wird einem Anwender ermöglicht dieses Element zu berühren, ohne einen elektrischen Schlag zu erhalten.

Um ein solche Trennung vom Hochvoltnetz sicher zu gewährleisten muss sicher erkannt werden, dass ein Anwender eventuell dieses spannungsführende Element berühren könnte. Dies wird durch ein Abnehmen der Berührungsschutzabdeckung realisiert.

Mit der Erfindung wird bereits vor einem Abnehmen der Berührungsschutzabdeckung ein Signal erzeugt, so dass das spannungsführende Element von dem Hochvoltnetz getrennt wird. Dieses Signal wird dabei mit einem Lösen des die Berührungsschutzabdeckung befestigenden Verbindungsmittels ausgelöst. Dadurch wird frühzeitig das spannungsführende Element von dem Hochvoltnetz getrennt. Darüber hinaus werden keine zusätzlichen beweglichen Elemente zum Detektieren benötigt. Es wird vielmehr lediglich ein Lösen der Verbindungsmittel detektiert, welche ohnehin beweglich sein müssen. Dadurch kann der Bauraum für diese zusätzlichen beweglichen Elemente eingespart werden. Ein solches Sicherungssystem wird dadurch vereinfacht und ist wirtschaftlicher herstellbar.

Erfindungsgemäß ist das Detektionsmittel ein Sensor. Ein Sensor ist in vielfältigen Ausführungen am Markt erhältlich. Durch die verschiedenen Sensortypen kann das Lösen des Verbindungsmittels auf verschiedene Weisen detektiert werden. Zudem kann entsprechend der gewünschten Detektierung ein entsprechender Sensor gewählt werden. Dadurch ist die Hochvoltvorrichtung wirtschaftlich herstellbar.

Erfindungsgemäß ist der Sensor ein Hallsensor oder ein Schwingkreis. Der Hallsensor hat den Vorteil, dass dieser durch das berührungslose Sensorprinzip kaum einem Verschleiß unterliegt und eine ungewöhnlich lange Lebensdauer erreicht. Die Messergebnisse sind zudem sehr verlässlich. Der Schwingkreis hat den Vorteil, dass dieser eine kompakte Bauweise aufweist und ebenfalls berührungslos arbeitet, wodurch ebenfalls eine hohe Lebensdauer erzielt wird.

Erfindungsgemäß ist das Detektionsmittel an einer Aufnahme für das Verbindungsmittel angeordnet. Die Aufnahme wird dabei vorzugsweise durch ein Bauteil ausgebildet, welches unabhängig von der Berührungsschutzabdeckung ist. Dadurch kann das Verbindungsmittel gelöst und die Berührungsschutzabdeckung abgenommen werden, ohne dass an dem Detektionsmittel etwas verändert werden muss. Die Sicherheit einer solchen Hochvoltvorrichtung wird dadurch erhöht.

In einer vorteilhaften Ausbildung sind die Abschalteinrichtung und das spannungsführende Element in baulich voneinander getrennten Bereichen der Hochvoltvorrichtung angeordnet. Die baulich getrennten Bereiche sind dabei vorzugsweise durch verschiedene Gehäusebauräume gebildet. Dadurch müssen Mittel bereitgestellt werden, um ein Signalübertragung von dem Detektionsmittel zu der Abschalteinrichtung zu gewährleistet. Eine solche Signalübertragung wird vorzugsweise mit Signalleitungen bereitgestellt. Eine solche Anordnung hat jedoch den Vorteil, dass die Abschalteinrichtung in eine Schaltungsanordnung der Hochvoltvorrichtung integriert werden kann.

Vorteilhafterweise ist das Detektionsmittel in dem gleichen Bereich angeordnet, wie die Abschalteinrichtung. Dadurch müssen keine die Bereiche baulich trennenden Bauteile überwunden werden. Dies vereinfacht eine Führung der Signalleitung zwischen dem Detektionsmittel und der Abschalteinrichtung. Zudem werden die Wege für die Signalleitungen verkürzt. Dadurch wird eine Signalübertragung zwischen dem Detektionsmittel und der Abschalteinrichtung vereinfacht und damit ist eine Hochvoltvorrichtung mit einem solchen Sicherungssystem wirtschaftlich herstellbar.

Bei einer weiteren vorteilhaften Ausführung ist die Berührungsschutzabdeckung als ein Deckel ausgebildet, welcher den Bereich, in welchem das spannungsführende Element aufgenommen ist, verschließt. Damit kann durch ein Verschlusselement gleichzeitig ein Berührungsschutz realisiert werden, so dass zusätzlich zu dem Deckel keine separate Berührungsschutzabdeckung notwendig ist. Dadurch kann eine solche Hochvoltvorrichtung wirtschaftlicher hergestellt werden.

Bei einer vorteilhaften Weiterbildung ist der Deckel aus Blech ausgebildet. Der Vorteil von Blech ist, dass dieses im Vergleich zu beispielsweise Druckguss kostengünstiger ist. Zudem lässt sich Blech einfacher weiterverarbeiten. Dadurch kann eine Hochvoltvorrichtung bereitgestellt, welche wirtschaftlicher herstellbar ist.

Die Erfindung umfasst zusätzlich ein Fahrzeug mit der erfindungsgemäßen Hochvoltvorrichtung. Mit einem solchen Fahrzeug werden die zu der Hochvoltvorrichtung genannten Vorteile erzielt.

Ausführungsbeispiele der Erfindung sind in der Zeichnung dargestellt und in der nachfolgenden Beschreibung näher erläutert. Es zeigt:
- Figur 1: Ausführungsbeispiel einer Hochvoltvorrichtung zum Betreiben einer Hochvoltanwendung,
- Figur 2: Ausführungsbeispiel der Hochvoltvorrichtung nach Figur 1 mit geöffneter Berührungsschutzabdeckung, und
- Figur 3: Ausführungsbeispiel eines Arbeitsprinzips des Detektionsmittels vor und nach einem Lösen eines Verbindungsmittels.

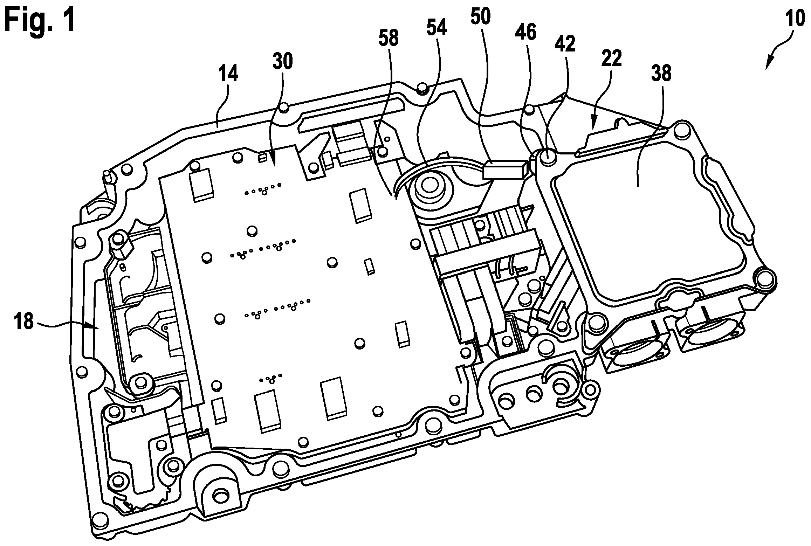

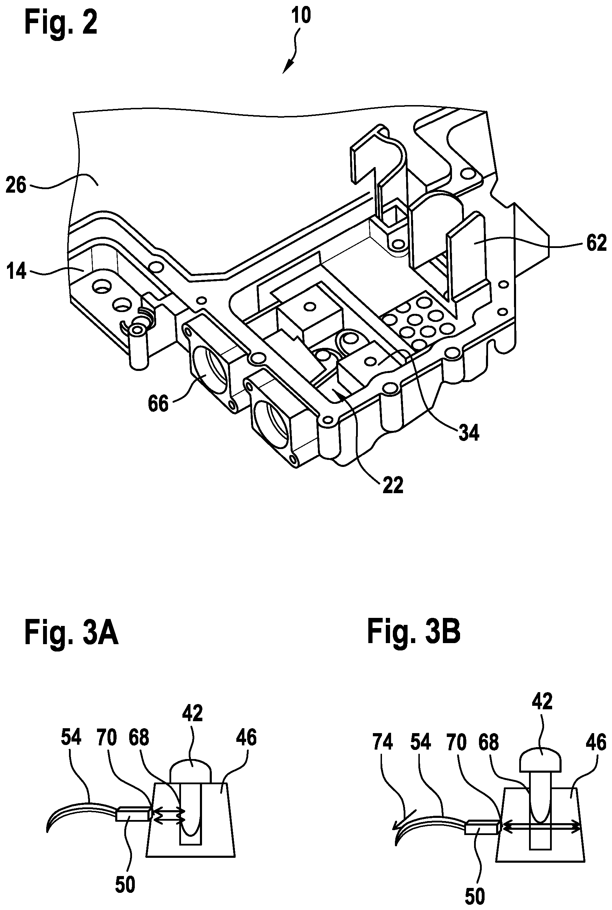

In Figur 1 ist ein Ausführungsbeispiel einer Hochvoltvorrichtung 10 zum Betreiben einer Hochvoltanwendung (nicht gezeigt) dargestellt. Die Hochvoltvorrichtung 10 in dem gezeigten Ausführungsbeispiel umfasst ein Gehäuse 14. Das Gehäuse 14 ist baulich in einen ersten Bereich 18 und in einen zweiten Bereich 22 aufgeteilt, wobei beide Bereiche 18, 22 voneinander getrennt sind. In dem ersten Bereich 18, welcher hier zur besseren Ansicht ohne Gehäuseabdeckung 26 (siehe Figur 2) gezeigt ist, ist eine Schaltungsanordnung 30 zum Betreiben der Hochvoltanwendung angeordnet.

In dem zweiten Bereich 22 ist ein spannungsführendes Element 34 (siehe Figur 2) angeordnet. In dieser Figur ist der zweite Bereich 22 mit einer Berührungsschutzabdeckung 38 gezeigt. Diese Berührungsschutzabdeckung 38, welche hier als Deckel ausgebildet ist, schützt einen Anwender vor einer Berührung des spannungsführenden Elementes 34. Die Berührungsschutzabdeckung 38 wird dabei über Verbindungsmittel 42, welcher hier als Schrauben ausgebildet sind, befestigt. Die Verbindungsmittel 42 sind dabei in Aufnahmen 46 für das Verbindungsmittel, welche durch das Gehäuse 14 ausgebildet sind, aufgenommen.

Zwei dieser Aufnahmen 46 grenzen sowohl an den ersten Bereich 18 als auch an den zweiten Bereich 22 an. In diesem Ausführungsbeispiel ist an einer dieser an beide Bereiche 18, 22 angrenzenden Aufnahmen 46 ein Detektionsmittel 50 angeordnet, wobei das Detektionsmittel 50 im ersten Bereich 18 positioniert ist, in welchem ebenfalls die Schaltungsanordnung 30 zum Betreiben der Hochvoltanwendung angeordnet ist.

Das Detektionsmittel 50 ist in diesem Ausführungsbeispiel als Sensor ausgebildet. Dieser Sensor 50 ist über eine Signalleitung 54 mit einer Abschalteinrichtung 58 verbunden, welche in der Schaltungsanordnung 30 angeordnet ist. Durch die Anordnung des Detektionsmittels 50 in dem gleichen Bereich 18, wie die Schaltungsanordnung 30 wird eine einfache Verbindung der Signalleitung 54 zu der Schaltungsanordnung 30 und damit zu der Abschalteinrichtung 58 gewährleistet.

Figur 2 zeigt ein Ausführungsbeispiel der Hochvoltvorrichtung 10 nach Figur 1 mit geöffneter Berührungsschutzabdeckung 38. Bei dieser Figur ist die Gehäuseabdeckung 26, welche den ersten Bereich 18 abdeckt an dem Gehäuse 14 angebracht, wohingegen die Berührungsschutzabdeckung 38 nicht gezeigt ist, so dass ein Einblick in den zweiten Bereich 22 möglich ist. Vor dem Abnehmen der Berührungsschutzabdeckung 38 wurden die vier Verbindungsmittel 42 gelöst. Das Lösen der Verbindungsmittel 42 wurde dabei über das Detektionsmittel 50 erkannt, so dass das spannungsführende Element 34 vom Hochvoltnetz getrennt wurde.

In der Figur 2 ist eine optionale Kappe 62 gezeigt. Diese Kappe 62 ist in einem Betriebszustand der Hochvoltvorrichtung 10 über den spannungsführenden Elementen 34, welche hier als Kontakte ausgebildet sind, angeordnet und wurde bereits hochgeklappt. Dadurch wird ein Zugang zu den spannungsführenden Elementen 34 ermöglicht. In dieser Position können elektrische Leitungen (nicht gezeigt) in Öffnungen 66 der Hochvoltvorrichtung 10 eingebracht werden und mit den spannungsführenden Elementen 34 kontaktiert werden.

Figur 3 zeigt ein Ausführungsbeispiel eines Arbeitsprinzips des Detektionsmittels 50 vor und nach einem Lösen eines Verbindungsmittels 42. Das Arbeitsprinzips wird hier anhand eines als Hallsensor ausgebildeten Detektionsmittels 50 verdeutlicht. Teilfigur A. zeigt dabei den Zustand vor einem Lösen des Verbindungsmittels 42. Die Aufnahme 46 bildet in diesem Ausführungsbeispiel dabei ein Gewinde 68 für das Verbindungsmittel 42 aus. Das Detektionsmittel 50 ist dabei in einer Höhe an der Aufnahme 46 angeordnet, so dass das Verbindungsmittel 42 in einem eingebrachten Zustand im Bereich einer durch das Detektionsmittel 50 gebildeten Messstelle 70 liegt. Dadurch erkennt das Detektionsmittel 50 ein vorhandenes Verbindungsmittel 42.

In Teilfigur B. ist ein Zustand nach einem Lösen des Verbindungsmittels 42 gezeigt. Wenn das Verbindungsmittel 42 den Bereich der Messstelle 70 verlässt, registriert das Detektionsmittel 50, aufgrund einer Änderung des Messwertes, dass das Verbindungsmittel 42 entfernt wird oder wurde. Dadurch gibt das Detektionsmittel 50 über die Signalleitung 54 ein Signal 74 an die Abschalteinrichtung 58, so dass vor dem Entfernen der Berührungsschutzabdeckung 38 das spannungsführende Element 34 von dem Hochvoltnetz trennbar ist.

## Patentansprüche

1. Hochvoltvorrichtung (10) zum Betreiben einer Hochvoltanwendung, wobei die Hochvoltvorrichtung (10) wenigstens umfasst:
- ein Detektionsmittel (50) zum Erkennen einer geöffneten Berührungsschutzabdeckung (38) für wenigstens ein spannungsführendes Element (34), wobei über das Detektionsmittel (50) vor einem vollständigen Abnehmen der Berührungsschutzabdeckung (38) ein Signal (74) abgebbar ist, und
- eine Abschalteinrichtung (58), welche mit dem Detektionsmittel (50) verbunden ist und über welche anhand des abgegebenen Signals (74) des Detektionsmittels (50) das spannungsführende Element (34) von einem Hochvoltnetz trennbar ist,
wobei das Detektionsmittel (50) an wenigstens einem die Berührungsschutzabdeckung (38) befestigenden Verbindungsmittel (42) angeordnet ist, so dass ein Lösen dieses Verbindungsmittels (42) detektierbar ist, um ein Entfernen der Berührungsschutzabdeckung (38) festzustellen,
**dadurch gekennzeichnet, dass** das Detektionsmittel (50) ein Sensor ist, wobei der Sensor (50) ein Hallsensor oder ein Schwingkreis ist, wobei das Detektionsmittel (50) an einer Aufnahme (46) für das Verbindungsmittel (42) angeordnet ist, wobei das Detektionsmittel (50) dabei in einer Höhe an der Aufnahme (46) angeordnet ist, so dass das Verbindungsmittel (42) in einem eingebrachten Zustand im Bereich einer durch das Detektionsmittel (50) gebildeten Messstelle (70) liegt, wodurch das Detektionsmittel (50) ein vorhandenes Verbindungsmittel (42) erkennt.

2. Hochvoltvorrichtung (10) nach Anspruch 1, **dadurch gekennzeichnet, dass** die Abschalteinrichtung (58) und das spannungsführende Element (34) in baulich voneinander getrennten Bereichen (18, 22) der Hochvoltvorrichtung (10) angeordnet sind.

3. Hochvoltvorrichtung (10) nach Anspruch 2, **dadurch gekennzeichnet, dass** das Detektionsmittel (50) in dem gleichen Bereich (18) angeordnet ist, wie die Abschalteinrichtung (58).

4. Hochvoltvorrichtung (10) nach Anspruch 2 oder 3, **dadurch gekennzeichnet, dass** die Berührungsschutzabdeckung (38) als ein Deckel ausgebildet ist, welcher den Bereich (22), in welchem das spannungsführende Element (34) aufgenommen ist, verschließt.

5. Hochvoltvorrichtung (10) nach Anspruch 4, **dadurch gekennzeichnet, dass** der Deckel (38) aus Blech ausgebildet ist.

6. Fahrzeug umfassend eine Hochvoltvorrichtung (10) nach einem der vorherigen Ansprüche.

## Claims

1. High-voltage device (10) for operating a high-voltage application, wherein the high-voltage device (10) comprises at least:
- a detection means (50) for identifying an open contact-protection cover (38) for at least one voltage-carrying element (34), wherein a signal (74) can be emitted via the detection means (50) before a complete removal of the contact-protection cover (38), and
- a switch-off apparatus (58), which is connected to the detection means (50) and via which the voltage-carrying element (34) can be disconnected from a high-voltage system by means of the signal (74) emitted by the detection means (50),
wherein the detection means (50) is arranged on at least one connecting means (42) that secures the contact-protection cover (38) such that a release of this connecting means (42) can be detected in order to determine a removal of the contact-protection cover (38),
**characterized in that** the detection means (50) is a sensor, wherein the sensor (50) is a Hall sensor or a resonant circuit, wherein the detection means (50) is arranged on a receptacle (46) for the connecting means (42), wherein the detection means (50) is arranged on the receptacle (46) at a height such that the connecting means (42) is in an inserted state in the region of a measuring point (70) formed by the detection means (50), as a result of which the detection means (50) identifies an existing connecting means (42).

2. High-voltage device (10) according to Claim 1, **characterized in that** the switch-off apparatus (58) and the voltage-carrying element (34) are arranged in structurally separated areas (18, 22) of the high-voltage device (10).

3. High-voltage device (10) according to Claim 2, **characterized in that** the detection means (50) is arranged in the same area (18) as the switch-off apparatus (58).

4. High-voltage device (10) according to Claim 2 or 3, **characterized in that** the contact-protection cover (38) is designed as a cap, which closes the area (22) in which the voltage-carrying element (34) is received.

5. High-voltage device (10) according to Claim 4, **characterized in that** the cap (38) is made of sheet metal.

6. Vehicle comprising a high-voltage device (10) according to any one of the preceding claims.

## Revendications

1. Dispositif à haute tension (10) destiné à faire fonctionner une application à haute tension, le dispositif à haute tension (10) comprenant au moins :
- un moyen de détection (50) destiné à détecter un capot anti-contact ouvert (38) pour au moins un élément sous tension (34), un signal (74) pouvant être délivré par le moyen de détection (50) avant que le capot anti-contact (38) ne soit complètement retiré, et
- un dispositif de désactivation (58) qui est relié au moyen de détection (50) et qui permet de séparer l'élément sous tension (34) d'un réseau à haute tension sur la base du signal (74) délivré par le moyen de détection (50),
le moyen de détection (50) étant disposé sur au moins un moyen de liaison (42) fixant le capot anti-contact (38) de façon à pouvoir détecter une libération de ce moyen de liaison (42) afin de déterminer un retrait du capot anti-contact (38),
**caractérisé en ce que** le moyen de détection (50) est un capteur, le capteur (50) étant un capteur à effet Hall ou un circuit oscillant, le moyen de détection (50) étant disposé sur un logement (46) pour le moyen de liaison (42), le moyen de détection (50) étant disposé à une certaine hauteur sur le logement (46) de telle sorte que le moyen de liaison (42) se trouve, dans un état inséré, dans la zone d'un point de mesure (70) formé par le moyen de détection (50), le moyen de détection (50) détectant ainsi un moyen de liaison (42) présent.

2. Dispositif à haute tension (10) selon la revendication 1, **caractérisé en ce que** le dispositif de désactivation (58) et l'élément sous tension (34) sont disposés dans des zones structurellement séparées (18, 22) du dispositif à haute tension (10).

3. Dispositif à haute tension (10) selon la revendication 2, **caractérisé en ce que** le moyen de détection (50) est disposé dans la même zone (18) que le dispositif de désactivation (58).

4. Dispositif à haute tension (10) selon la revendication 2 ou 3, **caractérisé en ce que** le capot anti-contact (38) est réalisé sous la forme d'un couvercle qui ferme la zone (22) dans laquelle est reçu l'élément sous tension (34).

5. Dispositif à haute tension (10) selon la revendication 4, **caractérisé en ce que** le couvercle (38) est réalisé en tôle.

6. Véhicule comprenant un dispositif à haute tension (10) selon l'une des revendications précédentes.
